# EUROPEAN PATENT APPLICATION

(11) **EP 4 198 498 A1**
(43) Date of publication of application: **21.06.2023**
(21) Application number: 21869538.5
(22) Date of filing: 06.08.2021
(51) Int. Cl.: G01N 21/64, G01J 3/02, G01J 3/46

(54) **SAMPLE INSPECTION DEVICE FOR DETECTING FLUORESCENCE OF SAMPLE**

(30) Priority: 18.09.2020 KR 20200120426
(71) Applicant: Aligned Genetics, Inc., Gyeonggi-do 14055 (KR)
(72) Inventor: DAN CHIN YU, Alexey, Seoul 06992 (KR); JUNG, Neon Cheol, Anyang-si Gyeonggi-do 14102 (KR); CHO, Keunchang, Seoul 08830 (KR)
(74) Representative: BCKIP Part mbB
(86) International application number: PCT/KR2021/010449
(87) International publication number: WO 2022/059915

(57) **Abstract**

A sample inspection device includes: a filter unit having a plurality of optical filters configured to transmit lights of different wavelength ranges; a light source unit configured to irradiate light to any one of the plurality of optical filters; a stage for placing a sample; a reflector oriented to reflect light transmitted through the one of the plurality of optical filters to the stage and to reflect light emitted from the sample on the stage to another one of the plurality of optical filters; a detection unit for detecting light emitted from the sample on the stage through light transmitted through the another one of the plurality of optical filters; an actuator for moving the filter unit; and a control unit configured to control the actuator to move the filter unit when the detection unit receives the light passing through the another one of the plurality of optical filters.

## Description

### TECHNICAL FIELD

The present disclosure relates to a sample inspection device for detecting fluorescence of a sample.

The present disclosure was carried out with the support of the national research and development project, and information on the national research and development project supporting the present disclosure is as follows.
(Project ID) 1415168666
(Project Number) 20009860
(Name of Department) Ministry of Trade, Industry and Energy
(Task Management (Professional) Institution) Korea Evaluation Institute of Industrial Technology
(Research Task Name) Bio-industry core technology development (R&D)
(Research Project Name) Development of blood cell analysis system based on machine learning image analysis for minimal residual disease
(Contribution ratio) 1/1
(Name of Project Performing Organization) Aligned Genetics, Inc.
(Research Period) 2020. 04. 01 - 2024. 12. 31

### BACKGROUND

In general, a fluorescence detection device uses the principle that a sample such as bacteria or protein emits fluorescence when absorbing light of a specific wavelength. For example, the fluorescence detection device may include a fluorescence microscope.

After treating the sample with a fluorescent material (fluorescent dye), the sample can be observed through light emitted from the sample by irradiating the sample with light having an absorption wavelength of the fluorescent material. The fluorescence detection device is widely used when observing a sample such as a biochip since it can obtain a clearer image compared to a general optical microscope.

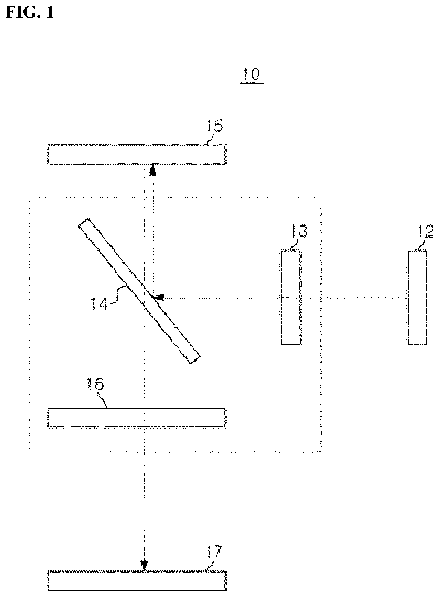

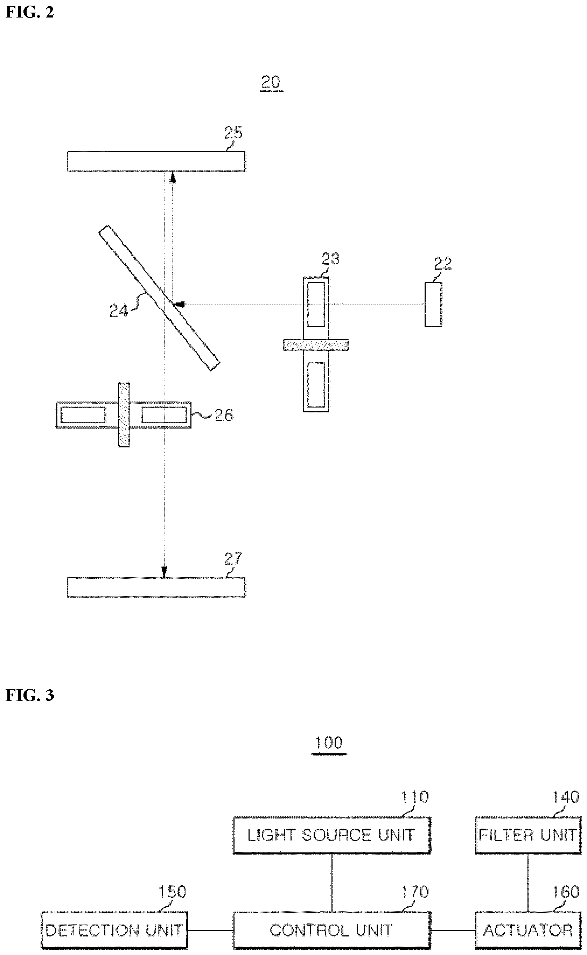

For example, conventional fluorescence detection devices may be formed as shown in FIGS. 1 and 2.

In a conventional first fluorescence detection device 10 of FIG. 1, light generated from a light source 12 may pass through an excitation filter 13 and may be reflected by a polarizer 14 toward a stage 15 on which a sample is placed. In addition, as light emitted from the sample passes through the polarizer 14 and an emission filter 16 and then enters a camera 17, so that a sample image can be formed.

In a conventional second fluorescence detection device 20 of FIG. 2, light generated from a light source 22 may pass through an excitation filter included in a first filter unit 23, and may be reflected by a polarizer 24 to a stage 25 on which a sample is placed. In addition, as light reflected from the sample is detected by a camera 27 after passing through an emission filter included in the polarizer 24 and a second filter unit 26, so that a sample image can be formed.

However, since the excitation filter and the emission filter are separately formed in the fluorescence detection device 10 or 20, the size of the fluorescence detection device are large, which increases the price of the fluorescence detection device. In addition, in the case of the second fluorescence detection device 20, since vibration may be severely generated by the plurality of filter units 23 and 26, the sample image may not be formed efficiently.

### SUMMARY

In view of the above, embodiments of the present disclosure provide a sample inspection device for detecting fluorescence of a sample, which is capable of efficiently obtaining a sample image by reducing the size of the device and reducing vibration.

In accordance with an embodiment of the present disclosure, there is provided a sample inspection device for detecting fluorescence of a sample, the device including: a filter unit having a plurality of optical filters configured to transmit lights of different wavelength ranges; a light source unit configured to irradiate light to any one of the plurality of optical filters; a stage on which a sample is to be placed; a reflector oriented to reflect light transmitted through the one of the plurality of optical filters to the stage and to reflect light emitted from the sample on the stage to another one of the plurality of optical filters; a detection unit configured to detect light emitted from the sample on the stage through light transmitted through the another one of the plurality of optical filters; an actuator for moving the filter unit; and a control unit configured to control the actuator to move the filter unit when the detection unit receives the light passing through the another one of the plurality of optical filters, wherein a wavelength range of light transmitted through the one of the plurality of optical filters and a wavelength range of light transmitted through the another one of the plurality of optical filters are different from each other.

The light source unit, the reflector, the filter unit, and the detection unit may be disposed such that a traveling direction of the light irradiated from the light source unit is inclined at a first inclination angle with respect to a traveling direction of the light reflected from the reflector toward the sample, and a traveling direction of the light emitted from the sample is inclined at a second inclination angle with respect to a traveling direction of the light reflected from the reflector toward the another one of the plurality of optical filters, and wherein the first inclination angle and the second inclination angle may be different from each other.

The first inclination angle may be formed to be less than 90 degrees, and the second inclination angle may be formed to be 90 degrees.

The filter unit may be moved in a linear direction by the actuator, and the plurality of optical filters may be disposed to be spaced apart from each other along the linear direction.

The filter unit may be configured to be rotatable about a rotation axis, and the plurality of optical filters may be arranged around the rotation axis, and the filter unit may be rotated by the actuator.

The light source unit, the reflector, the filter unit, and the detection unit may be disposed such that a direction in which the light from the light source unit is irradiated to the one of the plurality of optical filters is inclined at a first tilt angle with respect to a reference axis perpendicular to one surface of the filter unit, and a traveling direction of the light reflected from the reflector toward the another one of the plurality of optical filters is inclined at a second tilt angle with respect to the reference axis of the filter unit, and the first tilt angle and the second tilt angle may be formed to be equal.

The first tilt angle and the second tilt angle may be formed in opposite directions with respect to the reference axis.

The plurality of optical filters may include a first optical filter, a second optical filter, and a third optical filter, the first optical filter may be disposed between the second optical filter and the third optical filter and transmits light of a first wavelength range among lights emitted from the light source unit, the sample on the stage may absorb the light of the first wavelength range and emit light of a second wavelength range, the second optical filter may transmit the light of the second wavelength region emitted from the sample and reflected by the reflector, and when the light of the second wavelength range is detected by the detection unit, the filter unit may be moved such that the third optical filter receives light emitted from the light source unit and the first optical filter receives light emitted from the sample and reflected by the reflector.

When the filter unit is moved, the first optical filter may transmit light of a wavelength range overlapping at least in part with the first wavelength range among the light emitted from the sample and reflected by the reflector, and the third optical filter may transmit light of a third wavelength range among lights irradiated from the light source unit.

The one and another one of the plurality of optical filters may be disposed adjacent to each other.

When the one of the plurality of optical filters is positioned in an incident area, light emitted from the light source unit may be irradiated to the one of the plurality of optical filters, when the another one of the plurality of optical filters is positioned in an emission area, light emitted from the sample and reflected by the reflector may be irradiated to the another one of the plurality of optical filters, the incident area may be a virtual area where the light emitted from the light source unit intersects the filter unit, and the emission area may be a virtual area where the light emitted from the sample and reflected from the reflector intersects the filter unit.

The sample inspection device may further include a housing accommodating at least a portion of the filter unit and the reflector so as not to be exposed to external light.

The incident area and the emission area may be provided inside the housing.

The detection unit may acquire an image of the sample through the detected light, and a maximum rotational speed of the filter unit may be set such that a frame rate of the detection unit is 100 Hz per optical filter.

According to embodiments of the present disclosure, since a sample image is acquired by arranging both the excitation filter and the emission filter through one filter unit in which a plurality of optical filters are disposed, the overall size of the device can be reduced and vibration can be reduced compared to a conventional sample inspection device.

### BRIEF DESCRIPTION OF THE DRAWINGS

FIG. 1 is a diagram showing a conventional first fluorescence microscope.
FIG. 2 is a diagram showing a conventional second fluorescence microscope.
FIG. 3 is a block diagram of a sample inspection device for detecting fluorescence of a sample according to one embodiment of the present disclosure.
FIG. 4 is a cross-sectional view of the sample inspection device for detecting fluorescence of a sample according to one embodiment of the present disclosure.
FIG. 5 is a front view of the sample inspection device for detecting fluorescence of a sample according to one embodiment of the present disclosure.
FIG. 6 is a diagram showing a wavelength range of light generated from a light source unit of the sample inspection device for detecting fluorescence of a sample according to one embodiment of the present disclosure.
FIG. 7 is a diagram illustrating a wavelength range of light detected by a detection unit of the sample inspection device for detecting fluorescence of a sample according to one embodiment of the present disclosure.
FIG. 8 is a cross-sectional view of a sample inspection device for detecting fluorescence of a sample according to another embodiment of the present disclosure.

### DETAILED DESCRIPTION

Hereinafter, specific embodiments for implementing a spirit of the present disclosure will be described in detail with reference to the drawings.

In describing the present disclosure, detailed descriptions of known configurations or functions may be omitted to clarify the present disclosure.

When an element is referred to as being 'accommodated' in another element, it should be understood that the element may be directly accommodated in another element, but that other elements may exist in the middle.

The terms used in the present disclosure are only used for describing specific embodiments, and are not intended to limit the present disclosure. Singular expressions include plural expressions unless the context clearly indicates otherwise.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

Hereinafter, a sample inspection device 100 for detecting fluorescence of a sample according to one embodiment of the present disclosure will be described with reference to FIGS. 3 to 7.

Referring to FIGS. 3 to 5, the sample inspection device 100 for detecting fluorescence of a sample according to one embodiment of the present disclosure may obtain an image of the sample using light generated from a light source unit 110. The sample inspection device 100 for detecting fluorescence of a sample may include a light source unit 110, a stage 120, a reflector 130, a filter unit 140, a detection unit 150, an actuator 160, a control unit 170, and a housing 180.

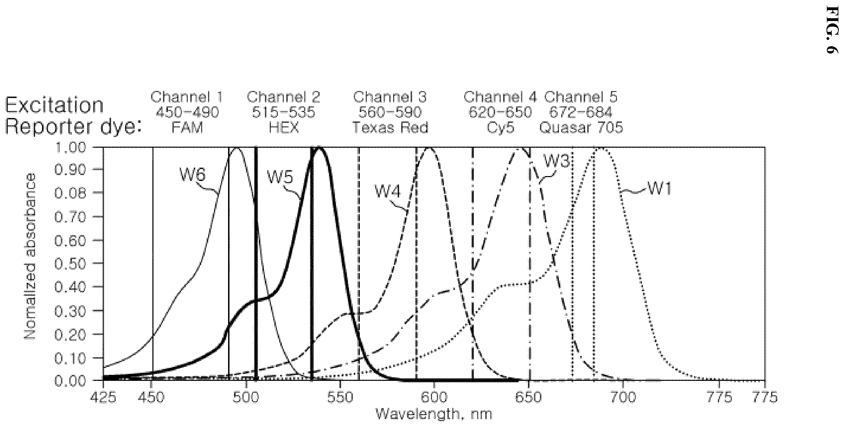

The light source unit 110 serves to generate light. For example, the light source unit 110 may include a light emitting diode (LED), a laser diode (LD), a halogen lamp, a mercury lamp, a xenon lamp, and the like. As shown in FIG. 6, light emitted from the light source unit 110 may have a wavelength range of 300 nm to 800 nm inclusive. The light generated from the light source unit 110 may be irradiated toward the filter unit 140.

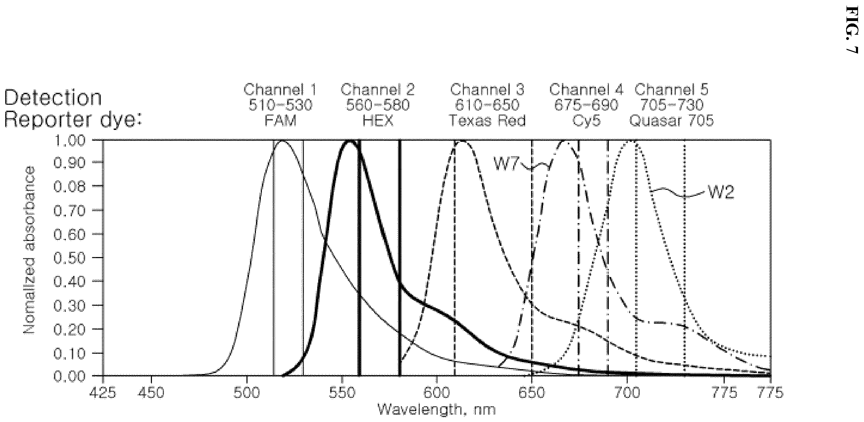

The sample may be placed on the stage 120. The sample may be an object to be observed by the sample inspection device 100. Such a sample may absorb light having a specific wavelength range, and may re-emit the absorbed light. A fluorescent dye may be coated to the sample. The sample may be an observation target such as a biological tissue. When a sample coated with the fluorescent dye is irradiated with ultraviolet rays and short-wavelength visible rays, the dye molecules of the sample can emit light. As such, when a fluorescent material is irradiated with light having a predetermined wavelength range, fluorescence in a visible ray or near-infrared ray range emitted when the dye molecules of the sample emit light may be emitted. Such a sample may have anisotropy optical characteristics, and as shown in FIG. 7, by birefringence of incident light, the sample can emit light having a predetermined wavelength range.

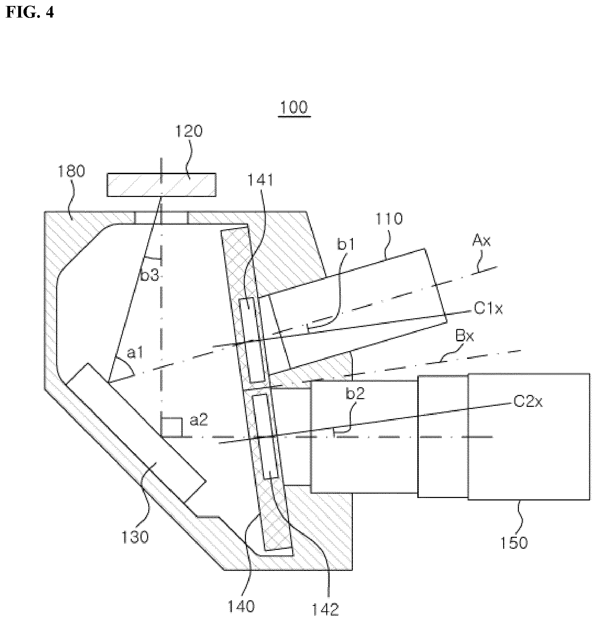

Referring to FIG. 4, the reflector 130 may reflect the light transmitted through any one of a plurality of optical filters 141, 142, and 143 (e.g., a first optical filter 141 to be described later) included in the filter unit 140 to the sample, and reflect the light emitted from the sample to another one of the plurality of optical filters 141, 142, and 143 (e.g., a second optical filter 142 to be described later).

The reflector 130 may be oriented to efficiently reflect light.

By using the reflector 130, the light source unit 110, the reflector 130, the filter unit 140, and the detection unit 150 may be disposed such that a traveling direction of the light irradiated from the light source unit 110 is inclined at a first inclination angle a1 with respect to a traveling direction of the light reflected from the reflector 130 toward the sample. In addition, the light source unit 110, the reflector 130, the filter unit 140, and the detection unit 150 may be disposed such that a traveling direction of the light emitted from the sample is inclined at a second inclination angle a2 with respect to a traveling direction of the light reflected from the reflector 130 toward another one of the plurality of optical filters.

The first inclination angle a1 and the second inclination angle a2 may be formed to be different from each other. For example, the first inclination angle a1 may be formed to be less than 90 degrees, and the second inclination angle a2 may be formed to be 90 degrees.

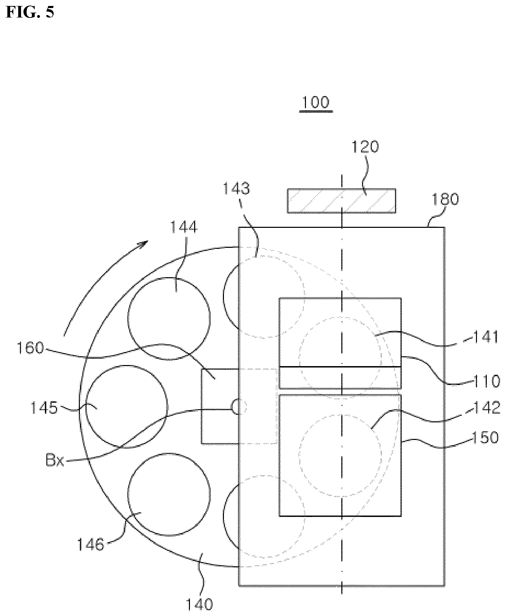

The filter unit 140 may be formed so that a plurality of optical filters 141, 142, 143, 144, 145, and 146 having different wavelength range transmission characteristics are inserted, and may be moved by the actuator 160. The filter unit 140 may be moved in various ways. For example, as shown in FIG. 5, the filter unit 140 may be formed as a circular plate and rotated about a rotation axis Bx by the actuator 160. In this case, the plurality of optical filters 141, 142, 143, 144, 145, and 146 may be arranged in the filter unit 140 while being spaced apart from each other by a predetermined circumferential angle around the rotation axis Bx. As another example, the filter unit 140 may be configured to be linearly moved by the actuator 160, and the plurality of optical filters 141, 142, 143, 144, 145, and 146 may be spaced apart from each other along the linear movement direction. Hereinafter, like axes C1x and C2x shown in FIG. 4, an axis extending in a direction perpendicular to one surface of the filter unit 140 may be defined as a reference axis. Moreover, when the filter unit 140 is rotated about the rotation axis Bx, the reference axis may be parallel to the extension direction of the rotation axis Bx.

The light generated from the light source unit 110 may pass through any one of the plurality of optical filters 141, 142, 143, 144, 145, and 146 by the filter unit 140 and may be reflected by the reflector 130 to the sample. Thereafter, the light emitted from the sample may be reflected by the reflector 130 to pass through another one of the plurality of optical filters 141, 142, 143, 144, 145, and 146. One and another one of the plurality of optical filters 141, 142, 143, 144, 145, and 146 may be disposed adjacent to each other.

By the plurality of optical filters 141, 142, 143, 144, 145, and 146, a direction in which the light from the light source unit 120 is irradiated to any one of the plurality of optical filters 141, 142, 143, 144, 145, and 146 may be formed to be inclined at a first tilt angle b1 with respect to the direction in which the reference axis of the filter unit 140 extends. In addition, the direction in which the light reflected from the reflector 130 proceeds to the another one of the plurality of optical filters may be formed to be inclined at a second tilt angle b2 with respect to the reference axis. The first tilt angle b1 and the second tilt angle b2 may be formed to be equal.

In addition, the formation direction of the first tilt angle b1 and the formation direction of the second tilt angle b2 may be set in opposite directions with respect to the reference axis.

By the first tilt angle b1 and the second tilt angle b2, the traveling direction of the light emitted from the sample may be formed to be inclined at a third tilt angle b3 with respect to the traveling direction of the light reflected from the reflector 130 toward the sample. For example, the third tilt angle b3 may be twice the first tilt angle b 1, but is not limited thereto. Further, the light passing through one of the plurality of optical filters 141, 142, 143, 144, 145, and 146 and the light passing through another one thereof may have different wavelength ranges. For example, as shown in FIGS. 6 and 7, a wavelength range of the light passing through another one of the plurality of optical filters 141, 142, 143, 144, 145, and 146 may be formed as values shifted from a wavelength range of the light transmitted through any one of the optical filters 141, 142, 143, 144, 145, and 146.

The plurality of optical filters 141, 142, 143, 144, 145, and 146 may each transmit light having a predetermined wavelength range according to each wavelength characteristic and block light having a different wavelength range.

In addition, when any one of the plurality of optical filters 141, 142, 143, 144, 145, and 146 is located in an incident area, the light emitted from the light source unit 110 may be irradiated to the one of the plurality of optical filters. When another one of the plurality of optical filters is located in an emission area, the light emitted from the sample and reflected by the reflector 130 may be irradiated to the another one of the plurality of optical filters.

The incident area may be a virtual area where the light emitted from the light source unit 110 intersects the filter unit 140. The emission area may be a virtual area where the light emitted from the sample and reflected by the reflector 130 intersects the filter unit 140.

For example, as shown in FIG. 5, the plurality of optical filters may include a first optical filter 141, a second optical filter 142, a third optical filter 143, a fourth optical filter 144, a fifth optical filter 145, and a sixth optical filter 146, but the present disclosure is not limited thereto, and the plurality of optical filters may include 6 or more optical filters, or 6 or less optical filters.

The first optical filter 141 may transmit light of a first wavelength range W1, and the second optical filter 142 may transmit light of a second wavelength range W2. In addition, the third optical filter 143 may transmit light of a third wavelength range W3, the fourth optical filter 144 may transmit light of a fourth wavelength range W4, the optical filter 145 may transmit light of a fifth wavelength range W5, and the sixth optical filter 146 may transmit light of a sixth wavelength range W6.

In addition, the first wavelength range W1 may be formed in the range of 670 nm to 690 nm, the second wavelength range W2 may be formed in the range of 700 nm to 730 nm, the third wavelength range W3 may be formed in the range of 600 nm to 650 nm, the fourth wavelength range W4 may be formed in the range of 550 nm to 590 nm, the fifth wavelength range W5 may be formed in the range of 510 nm to 540 nm, and the sixth wavelength range W6 may be formed in the range of 450 nm to 490 nm, but the present disclosure is not limited to the above.

The first optical filter 141 may be positioned between the second optical filter 142 and the third optical filter 143, and the fourth optical filter 144, the fifth optical filter 145 and the sixth optical filter 146 may be arranged sequentially. For example, when the filter unit 140 is formed to linearly move, the second optical filter 142, the first optical filter 141, the third optical filter 143, and the fourth optical filter 144, the fifth optical filter 145, and the sixth optical filter 146 may be linearly arranged in that order while being spaced apart from each other by a predetermined distance.

When the plurality of optical filters are arranged about the axis of rotation Bx, the first optical filter 141 may be disposed to be spaced apart from the second optical filter 142 and the third optical filter 143 at the predetermined circumferential angle with respect to the rotation axis Bx. In addition, the third optical filter 143 may be disposed between the first optical filter 141 and the fourth optical filter 144 to be spaced apart from the first optical filter 141 and the fourth optical filter 144 at the predetermined circumferential angle with respect to the rotation axis Bx. Further, the fourth optical filter 144 may be disposed to be spaced apart from the third optical filter 143 and the fifth optical filter 145 at the predetermined circumferential angle with respect to the rotation axis Bx between the third optical filter 143 and the fifth optical filter 145. Furthermore, the fifth optical filter 145 may be disposed between the fourth optical filter 144 and the sixth optical filter 146 to be spaced apart from the fourth optical filter 144 and the sixth optical filter 146 at the predetermined circumferential angle with respect to the rotation axis Bx.

The first optical filter 141 may be positioned in the incident area through which the light of the light source unit 120 may be transmitted, and the first optical filter 141 may transmit light of the first wavelength range W1 irradiated by the light source unit 110. The sample on the stage 120 may absorb the light of the first wavelength range W1 and emit light of the second wavelength range W2. The emitted light of the second wavelength range W2 may be a value shifted from the light of the first wavelength range W1.

In addition, the second optical filter 142 may transmit the light of the second wavelength range W2 emitted from the sample and reflected by the reflector 130.

When the light of the second wavelength range W2 is detected by the detection unit 150, the filter unit 140 may be moved so that the third optical filter 143 receives the light emitted from the light source unit 110, and the first optical filter 141 receives the light emitted from the sample and reflected by the reflector 130. For example, the filter unit 140 may be rotated by the predetermined circumferential angle or moved by the predetermined distance linearly. When the filter unit 140 is moved, the first optical filter 141 may be moved to the emission area.

The third optical filter 143 may be moved to the position of the incident area according to the movement of the filter unit 140 and may transmit the light of the third wavelength range W3 among the light of the light source unit 110. The light of a seventh wavelength range W7 emitted from the sample by the light of the third wavelength range W3 and reflected by the reflector 130 may pass through the first optical filter 141. The light of the seventh wavelength range W7 may be formed in the range of 675 nm to 690 nm and may transmit through the first optical filter 141. In other words, since the wavelength range of light emitted from the sample may be formed as a value shifted from the wavelength range of light transmitted toward the sample, as shown in FIGS. 6 and 7, light of the seventh wavelength range W7 and light of the first wavelength range W1 may partially overlap.

Thereafter, when the detection unit 150 detects light passing through the first optical filter 141, according to the movement of the filter unit 140, the third optical filter 143 may be positioned in the emission area, and the fourth optical filter 144 may be positioned in the incident area. In addition, when the detection unit 150 detects light passing through the third optical filter 143, the fourth optical filter 144 may be positioned in the emission area and the fifth optical filter 145 may be positioned in the incident area. Then, when the detection unit 150 detects light passing through the fourth optical filter 144, the fifth optical filter 145 may be positioned in the emission area and the sixth optical filter 146 may be positioned in the incident area.

Accordingly, unlike conventional optical filters, the plurality of optical filters 141, 142, 143, 144, 145, and 146 can perform both functions of an excitation filter and an emission filter depending on the area (incident area and emission area). In addition, as the plurality of optical filters 141, 142, 143, 144, 145, and 146 are provided in one filter unit 140, the size of the sample inspection device 100 can be reduced and vibration can be reduced compared to a conventional sample inspection device.

The detection unit 150 may detect light emitted from the sample and obtain an image of the sample through the detected light. The detection unit 150 may obtain an image of the sample through light passing through another one of the plurality of optical filters 141, 142, and 143. For example, as the detection unit 150 detects light of the second wavelength range W2 or light of the seventh wavelength range W7, the detection unit 150 may obtain an image of the sample. The detection unit 150 may include a lens and a camera to efficiently form an image, but is not limited thereto.

In addition, when the detection unit 150 detects light, it may transmit a detection signal to the control unit 170.

The actuator 160 may move the filter unit 140. The actuator 160 may include a motor that transfers driving force to the filter unit 140.

For example, the actuator 160 may rotate the filter unit 140 about a rotation axis or may move the filter unit 140 in a linear direction.

When the actuator 160 rotates the filter unit 140, the maximum rotational speed of the filter unit 140 may be set such that a frame rate of the detection unit 150 is 100 Hz per optical filter. The filter unit 140 can be observed to be continuously rotated.

In other words, an image acquisition period of the detection unit 150 may be a maximum of 1/100 second, and the actuator 160 may rotate the filter unit 140 by the predetermined distance or the predetermined circumferential angle for 1/100 second.

The control unit 170 may control the actuator 160 and the light source unit 110. When the detection unit 150 receives light, the control unit 170 may drive the actuator 160 to rotate the filter unit 140.

For example, when the detection unit 150 detects light of the second wavelength range W2 transmitted through the second optical filter 142, the detection unit 150 transmits a detection signal to the control unit 170 and the control unit 170 may drive the actuator 160 by the detection signal.

In addition, the control unit 170 may control the actuator 160 so that the filter unit 140 rotates at the maximum rotational speed. Further, the control unit 170 may control an image acquisition period of the detection unit 150 by controlling the rotational speed of the actuator 160.

The housing 180 may accommodate at least a portion of the filter unit 140 and the reflector 130 so as not to be exposed to external light, and the incident area and the emission area may be accommodated in the housing 180. With the housing 180, at least a portion of the filter unit 140 can be rotated inside the housing 180, and any one of the plurality of optical filters 141, 142, 143, 144, 145, and 146 and another one thereof may be accommodated in the housing 180.

In addition, the housing 180 may also accommodate the actuator 160 and the control unit 170, but the present disclosure is not limited thereto. The stage 120 may be positioned outside the housing 180. The light source unit 110 and the detection unit 150 may extend through the front of the housing 180.

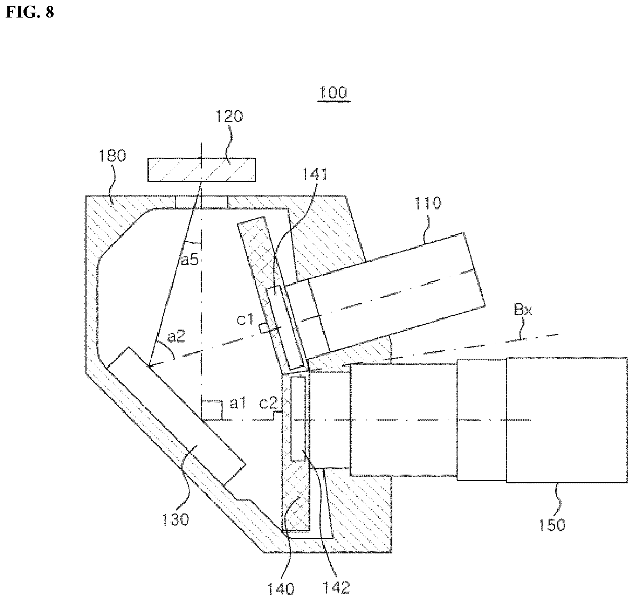

Hereinafter, a sample inspection device 100 for detecting fluorescence of a sample according to another embodiment of the present disclosure will be described with reference to FIG. 8.

In the sample inspection device 100 for detecting fluorescence of a sample according to another embodiment of the present disclosure, an incident angle c1 formed by a traveling direction of light emitted from a light source unit 110 with respect to a portion positioned in an incident area of one surface of a filter unit 140 may be 90 degrees. In addition, an emission angle c2 formed by a traveling direction of light emitted from the sample and reflected by a reflector 130 with respect to a portion positioned in an emission area of one surface of the filter unit 140 may be 90 degrees.

For example, as shown in FIG. 8, as the filter unit 140 is formed such that a center portion of the filter unit 140 provided with a rotation axis Bx protrudes compared to a peripheral surface, the incident angle c1 and the emission angle c2 may be formed at 90 degrees.

With such a shape of the filter unit 140, light emitted from the light source unit 110 may transmit in a direction perpendicular to a first light source filter 141 positioned in the incident area. In addition, light emitted from the sample and reflected by the reflector 130 may transmit in a direction perpendicular to a second optical filter 142 positioned in the emission area.

Hereinafter, operations and effects of the sample inspection device 100 for detecting fluorescence of a sample having the above configurations will be described.

The light irradiated from the light source unit 110 and incident on the sample may be referred to as 'excitation light', and the light emitted from the sample and reaching the detection unit 150 may be referred to as 'emission light'.

The reflector 130 may reflect the excitation light transmitted through any one of a plurality of optical filters to the sample and reflect the emission light emitted from the sample to another one of the plurality of optical filters.

In addition, the filter unit 140 may include the plurality of optical filters, and may be configured to be rotated by the actuator 160 when the detection unit 150 detects emitted light. The plurality of optical filters may each transmit light having a predetermined wavelength range according to each wavelength characteristic and block light having a different wavelength range.

Any one of the plurality of optical filters may transmit excitation light when positioned in the incident area, and another one of the plurality of optical filters may transmit emission light when positioned in the emission area.

Unlike conventional optical filters, the plurality of optical filters may perform both functions of an excitation filter and an emission filter depending on positions.

In addition, with the plurality of optical filters, a direction in which light from the light source unit 120 is irradiated to any one of the plurality of optical filters may be formed to be inclined at a first tilt angle b 1 with respect to the direction in which the rotation axis Bx of the filter unit 140 extends. Further, a direction in which light reflected from the reflector 130 propagates to another one of the plurality of optical filters may be formed to be inclined at a second tilt angle b2 with respect to the direction in which the rotation axis of the filter unit 140 extends. The first tilt angle b 1 and the second tilt angle b2 can be formed to be equal, and noise can be reduced when acquiring an image of the sample.

In addition, since the plurality of optical filters are provided in one filter unit 140, the size of the sample inspection device 100 can be reduced and vibration can be reduced compared to the conventional sample inspection device.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A sample inspection device for detecting fluorescence of a sample, the device comprising:
a filter unit having a plurality of optical filters configured to transmit lights of different wavelength ranges;
a light source unit configured to irradiate light to any one of the plurality of optical filters;
a stage on which a sample is to be placed;
a reflector oriented to reflect light transmitted through the one of the plurality of optical filters to the stage and to reflect light emitted from the sample on the stage to another one of the plurality of optical filters;
a detection unit configured to detect light emitted from the sample on the stage through light transmitted through the another one of the plurality of optical filters;
an actuator for moving the filter unit; and
a control unit configured to control the actuator to move the filter unit when the detection unit receives the light passing through the another one of the plurality of optical filters,
wherein a wavelength range of light transmitted through the one of the plurality of optical filters and a wavelength range of light transmitted through the another one of the plurality of optical filters are different from each other.

2. The sample inspection device of claim 1, wherein the light source unit, the reflector, the filter unit, and the detection unit are disposed such that a traveling direction of the light irradiated from the light source unit is inclined at a first inclination angle with respect to a traveling direction of the light reflected from the reflector toward the sample, and a traveling direction of the light emitted from the sample is inclined at a second inclination angle with respect to a traveling direction of the light reflected from the reflector toward the another one of the plurality of optical filters, and
wherein the first inclination angle and the second inclination angle are different from each other.

3. The sample inspection device of claim 2, wherein the first inclination angle is formed to be less than 90 degrees, and the second inclination angle is formed to be 90 degrees.

4. The sample inspection device of claim 1, wherein the filter unit is moved in a linear direction by the actuator, and
wherein the plurality of optical filters are disposed to be spaced apart from each other along the linear direction.

5. The sample inspection device of claim 1, wherein the filter unit is configured to be rotatable about a rotation axis, and the plurality of optical filters are arranged around the rotation axis, and
wherein the filter unit is rotated by the actuator.

6. The sample inspection device of claim 1, wherein the light source unit, the reflector, the filter unit, and the detection unit are disposed such that a direction in which the light from the light source unit is irradiated to the one of the plurality of optical filters is inclined at a first tilt angle with respect to a reference axis perpendicular to one surface of the filter unit, and a traveling direction of the light reflected from the reflector toward the another one of the plurality of optical filters is inclined at a second tilt angle with respect to the reference axis of the filter unit, and
wherein the first tilt angle and the second tilt angle are formed to be equal.

7. The sample inspection device of claim 6, wherein the first tilt angle and the second tilt angle are formed in opposite directions with respect to the reference axis.

8. The sample inspection device of claim 1, wherein the plurality of optical filters include a first optical filter, a second optical filter, and a third optical filter,
wherein the first optical filter is disposed between the second optical filter and the third optical filter and transmits light of a first wavelength range among lights emitted from the light source unit,
wherein the sample on the stage absorbs the light of the first wavelength range and emits light of a second wavelength range,
wherein the second optical filter transmits the light of the second wavelength region emitted from the sample and reflected by the reflector, and
wherein when the light of the second wavelength range is detected by the detection unit, the filter unit is moved such that the third optical filter receives light emitted from the light source unit and the first optical filter receives light emitted from the sample and reflected by the reflector.

9. The sample inspection device of claim 8, wherein when the filter unit is moved, the first optical filter transmits light of a wavelength range overlapping at least in part with the first wavelength range among the light emitted from the sample and reflected by the reflector, and the third optical filter transmits light of a third wavelength range among lights irradiated from the light source unit.

10. The sample inspection device of claim 1, wherein the one and another one of the plurality of optical filters are disposed adjacent to each other.

11. The sample inspection device of claim 1, wherein when the one of the plurality of optical filters is positioned in an incident area, light emitted from the light source unit is irradiated to the one of the plurality of optical filters,
wherein when the another one of the plurality of optical filters is positioned in an emission area, light emitted from the sample and reflected by the reflector is irradiated to the another one of the plurality of optical filters,
wherein the incident area is a virtual area where the light emitted from the light source unit intersects the filter unit, and
wherein the emission area is a virtual area where the light emitted from the sample and reflected from the reflector intersects the filter unit.

12. The sample inspection device of claim 11, further comprising a housing accommodating at least a portion of the filter unit and the reflector so as not to be exposed to external light.

13. The sample inspection device of claim 12, wherein the incident area and the emission area are provided inside the housing.

14. The sample inspection device of claim 1, wherein the detection unit acquires an image of the sample through the detected light, and
wherein a maximum rotational speed of the filter unit is set such that a frame rate of the detection unit is 100 Hz per optical filter.
